# EUROPÄISCHE PATENTSCHRIFT

(11) **EP 0 707 017 B1**
(45) Veröffentlichungstag und Bekanntmachung des Hinweises auf die Patenterteilung: **16.12.1998**
(21) Anmeldenummer: 95115237.0
(22) Anmeldetag: 27.09.1995
(51) Int. Cl.: C08F 36/04, C08C 19/20, C08F 4/52

(54) **Verfahren zur Herstellung von mittels Nd-Katalysatoren polymerisierten Dienkautschuken mit niedrigem cold-flow und geringem Eigengeruch**
Process for preparing diene rubber obtained with a Nd-catalyst and having improved cold flow and reduced odour
Procédé pour préparer un caoutchouc diène, obtenu avec un Nd-catalyseur, ayant un écoulement à froid amélioré et une odeur réduite

(30) Priorität: 10.10.1994 DE 4436059
(43) Veröffentlichungstag der Anmeldung: 17.04.1996
(73) Patentinhaber: BAYER AG, 51368 Leverkusen (DE)
(72) Erfinder: Wieder, Wolfgang, Dr., D-51373 Leverkusen (DE); Kuhlmann, Dieter, Dr., D-50259 Pulheim (DE); Nentwig, Wolfgang, Dr., D-51465 Bergisch Gladbach (DE)

(56) Entgegenhaltungen:
- DE-B- 1 260 794
- US-A- 4 533 711

## Beschreibung

Die Erfindung betrifft ein Verfahren zur Herstellung von mittels Nd-Katalysatoren polymerisierten Dienkautschuken mit niedrigem cold-flow und geringem Eigengeruch.

Die Herstellung von Polydienen, z.B. von cis-Polybutadien (BR) auf Basis von Ziegler-Natta-Katalysatoren ist ein seit langem großtechnisch genutztes Verfahren. Entsprechend dem verwendeten Katalysatormetall gibt es handelsübliches Ti-BR, Co-BR, Ni-BR und Nd-BR. Produkte und Verfahren haben unterschiedliche spezifische Vor- und Nachteile. So müssen beispielsweise bei einigen Herstellverfahren die Polymerisationstemperaturen durch Kühlung niedrig gehalten werden (isotherme Fahrweise), um unerwünschte Nebenreaktionen zu unterdrücken, die zur Vergelung der Reaktoren bzw. Verschlechterung von Produkteigenschaften führen würden. Solche Verfahren sind energetisch ungünstiger als adiabatisch geführte Polymerisationen, bei denen die freiwerdende Polymerisationswärme genutzt wird, um die Polymerisationslösung aufzuheizen.

In der europäischen Patentanmeldung 0 011 184 werden metallorganische Mischkatalysatoren auf Basis von Neodymcarboxylaten beschrieben, die in besonders geeigneter Weise bei der Lösungspolymerisation von konjugierten Dienen verwendet werden können. Die gemäß der europäischen Patentanmeldung 0 011 184 hergestellten Polydiene, insbesondere Polybutadien, besitzen ein besonders günstiges Eigenschaftsbild. Nachteilig bei der Polymerisation von Dienen mit den genannten Katalysatoren ist jedoch, daß die Polymerisate einen relativ hohen cold-flow besitzen, was zu Problemen bei Lagerung und Transport führen kann. Es ist zwar bekannt, daß durch Präformierung von Nd-Katalysatoren die Katalysatorwirkung verändert werden kann. Solche präformierte Nd-Katalysatoren liefern Polymerisate mit relativ niedrigem cold-flow, jedoch sinkt durch das Präformieren die Katalysatoraktivität, so daß der Verbrauch an Neodym zum Teil beträchtlich ansteigt.

Es ist weiterhin bekannt, daß man Polydiene mit verbesserten Eigenschaften, insbesondere niedrigem cold-flow, herstellen kann, wenn man die Dienpolymere nach der Polymerisation mit Dischwefeldichlorid, Schwefeldichlorid, Thionylchlorid, Dischwefeldibromid oder Thionylbromid behandelt (siehe DE-AS 1 260 794). Nachteilig bei dem in der DE-AS 1 260 794 beschriebenen Verfahren zur Herstellung kautschukelastischer Dienpolymere mit verbesserten Eigenschaften ist jedoch, daß die erhaltenen Dienpolymere einen unangenehmen Geruch aufweisen, der bei der Verarbeitung dieser Dienpolymeren störend wirkt.

Aus US-A-4,533,711 ist die Herstellung von Butadien-Kautschukmischungen bekannt, die eine verbesserte "green strength" besitzen. Die dort beschriebenen Polybutadiene werden in einem zweistufigen Polymerisationsprozeß hergestellt, wobei ein Katalysatorsystem basierend auf Verbindungen der Seltenen Erden eingesetzt wird. Gemäß den Ausführungen in Spalte 4, Zeilen 29 - 30, kann die Zweitstufe des Polymerisationsverfahrens in adiabatischer Fahrweise durchgeführt werden. Über eine Verbesserung des cold-flows und des Eigengeruchs von Polybutadien wird in der US-Patentschrift nichts ausgesagt.
Aufgabe der vorliegenden Erfindung ist also, ein Verfahren zur Verfügung zu stellen, das auf energetisch günstigem Wege Dienkautschuke liefert mit guten kautschuktechnischen Eigenschaften, geringem cold-flow und keinem unangenehmen Eigengeruch.

Die vorliegende Erfindung betrifft daher ein Verfahren zur Herstellung von mittels Nd-Katalysatoren polymerisierten Dienkautschuken mit niedrigem cold-flow und geringem Eigengeruch, das dadurch gekennzeichnet ist, daß man Diolefine in Gegenwart von inerten, organischen Lösungsmitteln und in Gegenwart von metallorganischen Mischkatalysatoren auf Basis von Neodymcarboxylaten in adiabatischer Weise bei Temperaturen von -20°C bis 150°C polymerisiert, anschließend das so erhaltene Reaktionsgemisch durch Verminderung des Druckes entspannt und danach das Reaktionsgemisch mit Dischwefeldichlorid, Schwefeldichlorid und/oder Thionylchlorid behandelt.

Als Diene können in das erfindungsgemäße Verfahren Butadien, Isopren, Pentadien und 2,3-Dimethylbutadien eingesetzt werden, insbesondere Butadien und Isopren. Die genannten Diene könne sowohl einzeln als auch im Gemisch untereinander eingesetzt werden, so daß entweder Homopolymerisate oder Copolymerisate der genannten Diene entstehen.

Die erfindungsgemäße Polymerisation wird in Gegenwart von inerten, organischen Lösungsmitteln durchgeführt. Als inerte, organische Lösungsmittel kommen beispielsweise in Frage: Aromatische, aliphatische und/oder cycloaliphatische Kohlenwasserstoffe, wie Benzol, Toluol, Pentan, n-Hexan, iso-Hexan, Heptan und/oder Cyclohexan.

Die inerten, organischen Lösungsmittel werden in Mengen von 200 bis 900 Gew.-Teilen, bezogen auf 100 Gew.-Teile Monomere, eingesetzt. Bevorzugt sind Mengen von 400 bis 700 Gew.-Teile.

Für das erfindungsgemäße Verfahren ist es von Bedeutung, daß als Neodym-Katalysatoren solche Neodym-Katalysatoren eingesetzt werden, wie sie in der genannten europäischen Patentanmeldung 0 011 184 beschrieben werden. Die einzusetzenden Neodym-Katalysatoren bestehen demgemäß aus:
A) einem Carboxylat des Neodyms der Formel 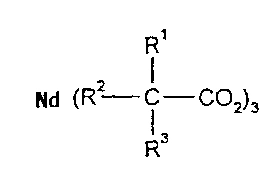
B) einem Aluminiumalkyl Al R₃⁴ oder R₂⁴Al H
C) einer Lewis-Säure, wobei in den Formeln
   - R¹, R² und R³: gleich sind oder verschiedene Alkylreste mit 1 bis 10 Kohlenstoffatomen bedeuten, wobei die Summe aller C-Atome in den Substituenten 6 bis 20 beträgt, und
   - R⁴: einen Alkylrest mit 1 bis 10 Kohlenstoffatomen bedeutet.

Insbesondere werden in das erfindungsgemäße Verfahren Katalysatoren eingesetzt, die bestehen aus z.B.:
A) Neodym(versatat)₃,
B) Diisobutylaluminiumhydrid (DIBAH),
und
C) Ethylaluminiumsesquichlorid (EASC).

Bei der erfindungsgemäßen Polymerisation wird der erfindungsgemäße metallorganische Mischkatalysator auf Basis von Neodymcarboxylaten in Mengen von 0,001 bis 0,15, bezogen auf 100 Gew.-Teile Monomer, eingesetzt, insbesondere in Mengen von 0,05 bis 0,10 Gew.-Teilen.

Das erfindungsgemäße Verfahren wird in adiabatischer Weise bevorzugt bei Temperaturen von -20 bis 130°C durchgeführt. Bei der adiabatischen Fahrweise stellen sich Drücke von ca. 1 bis 7 bar ein.

Nachdem die Polymerisation zu Ende geführt wurde (Umsatz: ≥ 98 %) wird das so erhaltene Reaktionsgemisch durch Verminderung des Druckes entspannt. Dabei kann auf Normaldruck entspannt werden; aus technischen Gründen wird der Druck auf 1,1 bis 1,6 bar erniedrigt. Bei der Entspannung verflüchtigen sich alle niedrigsiedenden Bestandteile des Reaktionsgemisches, wie nicht umgesetzte Diene.

Das nach der Entspannung verbleibende Reaktionsgemisch, das nunmehr praktisch frei von niedrigsiedenden Anteilen ist, wird mit Dischwefeldichlorid, Schwefeldichlorid und/oder Thionylchlorid behandelt. Bevorzugt wird die Behandlung mit Di schwefel di chlorid durchgeführt.

Im allgemeinen werden 0,05 bis 0,5 Gew.-Teile, bevorzugt 0,1 bis 0,4 Gew.-Teile Schwefelchloride auf 100 Gew.-Teile Dienkautschuk zugegeben.

Die Behandlung mit den Schwefelchloriden erfolgt üblicherweise bei Temperaturen von 20 bis 150°C, bevorzugt bei 40 bis 60°C.

Bei dem erfindungsgemäßen Verfahren werden die genannten Schwefelchloride etwa 5 bis 30 Minuten mit dem Reaktionsgemisch gerührt, danach wird das Reaktionsgemisch aufgearbeitet, indem man das Lösungsmittel in üblicher Weise mit Wasserdampf abstrippt und die wasserfeuchten Krümel trocknet, z.B. mit einer Seiherschnecke und nachgeschaltetem Heißlufttrockner.

Nach dem erfindungsgemäßen Verfahren ist es in besonders vorteilhafter Weise möglich, den erhaltenen Dienkautschuken zusammen mit den Schwefelchloriden Extenderöle, wie z.B. aromatische Extenderöle, zuzugeben. Dadurch gelingt es in direkter Weise die Mooney-Viskosität der Kautschuke auf verarbeitungsgerechte Werte von 30 bis 50 einzustellen. Die entsprechende Menge an Extenderöl hängt von der gewünschten Mooney-Viskosität der Dienkautschuke ab und kann leicht durch entsprechende Vorversuche ermittelt werden. Üblich sind 20 bis 50 phr (phr = per hundred rubber).

Es ist besonders überraschend, daß das erfindungsgemäße Verfahren nur gelingt, wenn in adiabatischer Fahrweise mit anschließender Entspannung des Reaktionsgemisches die Polymerisation in Gegenwart der in der europäischen Patentanmeldung 0 011 184 beschriebenen metallorganischen Mischkatalysatoren durchgeführt wird.

Gute Resultate bezüglich des cold-flow werden erhalten, wenn man beispielsweise mit Titan-Katalysatoren polymerisiert (siehe Vergleichsbeispiel). Die derart hergestellten Produkte besitzen jedoch üblicherweise einen starken Eigengeruch.

Das erfindungsgemäße Verfahren besitzt folgende Vorteile:
Herstellung von Polydienen mit hoch stereospezifischer cis-1,4-Struktur und guten Produkteigenschaften mit einem adiabatischen Polymerisationsverfahren, bei dem die Reaktion zu hohen Umsätzen geführt wird. Durch die anschließende Entspannung und Umsetzung mit Schwefelverbindungen werden Produkte mit geringem cold flow und Eigengeruch erhalten.

### Beispiele

In den folgenden Beispielen wird der cold-flow in (mg/min) angegeben. Er wurde mittels eines modifizierten Ausflußplastometers bei 50°C bestimmt. Diese Methode ist den Verhältnissen in der Praxis weitestgehend angepaßt.

### Vergleichsbeispiel 1

Dieses Beispiel entspricht dem Stand der Technik, wobei die Polymerisation mit einem Titankatalysator durchgeführt wird.

Eine Kaskade von 4 gerührten Polymerisationsreaktoren wird kontinuierlich mit einem Strom Butadien, gelöst in Benzol (12 %) beschickt. Temperatur der Monomerlösung 4°C. Die Polymerisation wird durch Zugabe folgender Katalysatorkomponenten gestartet:
1. Triethylaluminium (TEA), 1,35 mmol phm (per hundred monomer)
2. Titanethoxitriiodid (TEI), 0,15 mmol phm
3. Titantetrachlorid (TTC), 0,15 mmol phm.

Durch Kühlung wird die Lösung auf Temperaturen ≤ 50°C gehalten. Bei ca. 95 % Umsatz wird die Reaktion durch Zugabe von 0,65 phm Stearinsäure und 0,27 phm Vulkanox BKF abgestoppt. Die Lösung wird auf ca. 130°C aufgeheizt und in einen Entspannungsbehälter gefördert, wobei nicht umgesetztes Butadien und ein Teil des Lösungsmittels verdampft, so daß die Polymerkonzentration auf 15 % ansteigt. Die Lösung wird mit Wasserdampf behandelt, so daß das Lösungsmittel entfernt wird. Dabei entsteht eine Krümelsuspension, die nach dem Stand der Technik durch Entwässern und Trocknen zum fertigen Produkt aufgearbeitet wird.

Das Produkt hat folgende Eigenschaften: ML 1+4/100°C: 47. Cold flow 18 mg/min.

### Vergleichsbeispiel 2

Dieses Beispiel entspricht dem 1. Vergleichsbeispiel mit folgendem Unterschied:
- Katalysatordosierung: TEA: 1,5 mmol phm
TEI: 0,2 mmol phm.
TTC: 0,2 mmol phm.

Dadurch wird ein Produkt hergestellt mit ML von 37. Dieses Produkt wird nach dem Abdampfen des Restmonomeren mit 0,085 phr S₂Cl₂ ca. 30 Minuten gerührt. Das anschließend auf üblichem Wege aufgearbeitete Produkt hat folgende Eigenschaften:
ML-1+4/100°C: 47. Cold flow 4 mg/min.

Der cold flow ist also deutlich erniedrigt, allerdings hat das Produkt nun einen deutlichen Eigengeruch, der als störend empfunden wird.

### Erfindungsgemäßes Beispiel

Eine Kaskade von 3 gerührten Reaktoren wird kontinuierlich mit einem Strom Butadien, gelöst in Hexan (17 %), beschickt. Temperatur der Monomerlösung 0°C. Die Polymerisation wird durch Zugabe folgender Katalysatorkomponenten gestartet:
1. Diisobutylaluminiumhydrid (DIBAH), 0,150 g phm
2. Ethylaluminiumsesquichlorid (EASC), 0,03 g phm
3. Neodymversatat (NdV), 0,08 g phm.

Die Polymerisation läuft adiabatisch, so daß nach Erreichen von > 99 % Umsatz die Temperatur ca. 110°C beträgt. Der Katalysator wird durch Zugabe von 0,5 phm Stearinsäure desaktiviert, gleichzeitig wird eine Lösung von Stabilisator (0,4 phm TNPP/0,2 phm Irganox 565) zugegeben. In einem Entspannungsbehälter wird der Druck, der vorher ca. 5 bis 7 bar betragen hatte, auf 1,5 bar erniedrigt, wobei leichtsiedende Bestandteile und Lösungsmittel verdampfen. Dadurch steigt die Konzentration des Produktes im Lösungsmittel auf 18 % an. Diese Lösung wird mit 0,10 phm S₂Cl₂ ca. 30 Minuten gerührt, anschließend wird auf üblichem Wege aufgearbeitet.

Das Produkt hat folgende Eigenschaften:
ML 1+4/100°C: 44, cold flow 10 mg/min.

Es ist kein störender Eigengeruch vorhanden.

### Vergleichsbeispiel 3

Dieses Beispiel wird durchgeführt wie das erfindungsgemäße Beispiel mit dem Unterschied, daß die Polymerlösung vor Umsetzung mit S₂Cl₂ nicht durch Entspannen aufkonzentriert wird. Man erhält ein Produkt wie erfindungsgemäß, allerdings ist noch ein deutlicher Eigengeruch feststellbar.

## Patentansprüche

1. Verfahren zur Herstellung von mittels Nd-Katalysatoren polymerisierten Dienkautschuken mit niedrigem cold-flow und geringem Eigengeruch, dadurch gekennzeichnet, daß man Diolefine in Gegenwart von inerten, organischen Lösungsmitteln und in Gegenwart von metallorganischen Mischkatalysatoren auf Basis von Neodymcarboxylat in adiabatischer Weise bei Temperaturen von -20 bis 150°C polymerisiert, anschließend das so erhaltene Reaktionsgemisch durch Verminderung des Druckes entspannt und danach das Reaktionsgemisch mit Dischwefeldichlorid, Schwefeldichlorid und/oder Thionylchlorid behandelt.

2. Verfahren nach Anspruch 1, dadurch gekennzeichnet, daß man die Diolefine in Gegenwart von inerten aromatischen, aliphatischen und/oder cycloaliphatischen Kohlenwasserstoffe und in Gegenwart von 0,001 bis 0,15 Gew.-Teile, bezogen auf 100 Gew.-Teile Monomer, metallorganischen Mischkatalysatoren auf Basis von Neodymcarboxylat in adiabatischer Weise bei Temperaturen von -20 bis 150°C polymerisiert, anschließend das so erhaltene Reaktionsgemisch durch Verminderung des Druckes entspannt und danach das Reaktionsgemisch mit 0,05 bis 0,5 Gew.-Teile, bezogen auf 100 Gew.-Teile Dienkautschuk, an Dischwefeldichlorid, Schwefeldichlorid und/oder Thionylchlorid behandelt.

3. Verfahren nach Ansprüchen 1 und 2, dadurch gekennzeichnet, daß man die Behandlung des Reaktionsgemisches mit Dischwefeldichlorid durchführt.

## Claims

1. A process for producing diene rubbers polymerised by means of Nd catalysts and exhibiting reduced cold flow and low intrinsic odour, characterised in that diolefines are polymerised adiabatically at temperatures of -20°C to 150°C in the presence of inert organic solvents and in the presence of metallo-organic mixed catalysts based on neodymium carboxylate, the reaction mixture obtained in this manner is subsequently depressurised by reducing the pressure, and thereafter the reaction mixture is treated with disulphur dichloride, sulphur dichloride and/or thionyl chloride.

2. A process according to claim 1, characterised in that the diolefines are polymerised adiabatically at temperatures of -20 to 150°C in the presence of inert aromatic, aliphatic and/or cycloaliphatic hydrocarbons and in the presence of 0.001 to 0.15 parts by weight, based on 100 parts by weight of monomer, of metallo-organic mixed catalysts based on neodymium carboxylate, the reaction mixture obtained in this manner is subsequently depressurised by reducing the pressure and thereafter the reaction mixture is treated with 0.05 to 0.5 parts by weight, based on 100 parts by weight of diene rubber, of disulphur dichloride, sulphur dichloride and/or thionyl chloride.

3. A process according to claims 1 or 2, characterised in that the reaction mixture is treated with disulphur dichloride.

## Revendications

1. Procédé de préparation de caoutchoucs diènes polymérisés à l'aide de catalyseurs au Nd, ayant un faible fluage à froid et une odeur propre réduite, caractérisé en ce que l'on polymérise des dioléfines de manière adiabatique, à des températures de -20°C à 150°C, en présence de solvants organiques inertes et en présence de catalyseurs mixtes organométalliques à base de carboxylates de néodyme, puis on détend le mélange réactionnel ainsi obtenu en abaissant la pression et on traite ensuite le mélange réactionnel avec du dichlorure de disoufre, du dichlorure de soufre et/ou du chlorure de thionyle.

2. Procédé selon la revendication 1, caractérisé en ce que l'on polymérise les dioléfines en présence d'hydrocarbures aromatiques, aliphatiques et/ou cycloaliphatiques inertes et en présence de 0,001 à 0,15 parties en masse, pour 100 parties en masse de monomère, de catalyseurs mixtes organométalliques à base de carboxylate de néodyme, de manière adiabatique à des températures de -20°C à 150°C, puis on détend le mélange réactionnel ainsi obtenu en abaissant la pression et on traite ensuite le mélange réactionnel avec 0,05 à 0,5 partie en masse de dichlorure de soufre et/ou du chlorure de thionyle pour 100 parties en masse de caoutchouc diène, de dichlorure de disoufre.

3. Procédé selon les revendications 1 et 2, caractérisé en ce que l'on effectue le traitement du mélange réactionnel avec du dichlorure de disoufre.
